# EUROPEAN PATENT SPECIFICATION

(11) **EP 0 856 733 B1**
(45) Date of publication and mention of the grant of the patent: **02.06.2004**
(21) Application number: 98200155.4
(22) Date of filing: 21.01.1998
(51) Int. Cl.: G01N 29/04, G01N 29/10

(54) **Single row bearing with monitoring device**
Einzelreihiges Lager mit Überwachungsvorrichtung
Palier à rangée simple avec dispositif de surveillance

(30) Priority: 24.01.1997 NL 1005088
(43) Date of publication of application: 05.08.1998
(73) Proprietor: SKF Engineering & Research Centre B.V., 3430 DT Nieuwegein (NL)
(72) Inventor: Bourgeois-Jacquet, Pierre, 89200 Avallon (FR); Hands, Godfrey, Attleborough, Nuneaton CV11 6RY (GB)
(74) Representative: van Westenbrugge, Andries

(56) References cited:
- EP-A- 0 001 474
- EP-A- 0 175 441
- EP-B- 0 228 731
- DE-A- 3 941 267

## Description

The invention is related to a bearing comprising two opposing rings and a single row of rolling balls accommodated in the raceways of each of the rings. Such a bearing is disclosed in EP-A-228731.

In particular, the severe conditions to which cranes on North Sea oil and gas platforms are subjected, pose a high risk. In order to avoid catastrophic failures of the bearings, authorities have stipulated that they are to be regularly inspected. This involves the removal of the crane so as to make the bearing accessible for inspection. This procedure is very time consuming, and results in an almost unacceptable downtime of the crane. Moreover, the costs involved in such inspection are high.

The slewing bearings are to be inspected in particular with respect to crack development in critical areas. Small cracks are usually accepted, in particular in case crack propagation is rather slow due to the materials and metallurgical processes employed in the manufacturing process. However, regular checking is necessary to ensure that the slewing bearing is replaced as soon as the cracks become too large

The object of the invention is to provide a method enabling the detection of surface and subsurface damage of the raceways and cracks in slewing bearings having a single row of rolling balls, without having to dismantle the crane for that purpose.

This object is achieved by means of a bearing as defined in claim 1. At least one of the rings carries two ultrasonic scanning devices which are situated on opposite sides to the raceway of the other ring for scanning specific areas of the other ring upon relative rotation of the rings, wherein the ultrasonic scanning devices are directed such that their ultrasonic waves intersect each other at an area lying beyond the raceway of the other ring.

By means of the two ultrasonic scanning devices, a reliable scan of the complete cross section of the ring in question can be obtained. Thereby, the highly loaded areas of in particular a far-point contact ball bearing are fully covered.

This bearing according to the invention has the advantage of permitting uninterrupted inspection over 360° of the ring being inspected.

By means of the ultrasonic scanning devices, the rings can be inspected without dismantling the crane. Thereby, the downtime of the crane is greatly reduced. Moreover, the scanning results obtained are highly reliable due to the fact that both the surface area of the raceways, as well as the internal structure of the ring in question can be examined.

In particular, the ultrasonic scanning devices can be opposite the other ring next to the raceway of said ring, and can be directed such that ultrasonic waves produced thereby impinge upon the raceway of the other ring at an angle. By this impinging action of the ultrasonic waves, a high resolution is obtained which further enhances the scanning ability of the sensors.

Preferably, the ultrasonic waves impinge upon the raceway at an angle lying between 35 and 70 degrees with respect to a radial line: in particular, the ultrasonic waves may impinge upon the raceway at an angle lying between 35 and 55 degrees. Very good results are obtained in case the ultrasonic waves impinge upon the raceway at an angle of about 45 degrees.

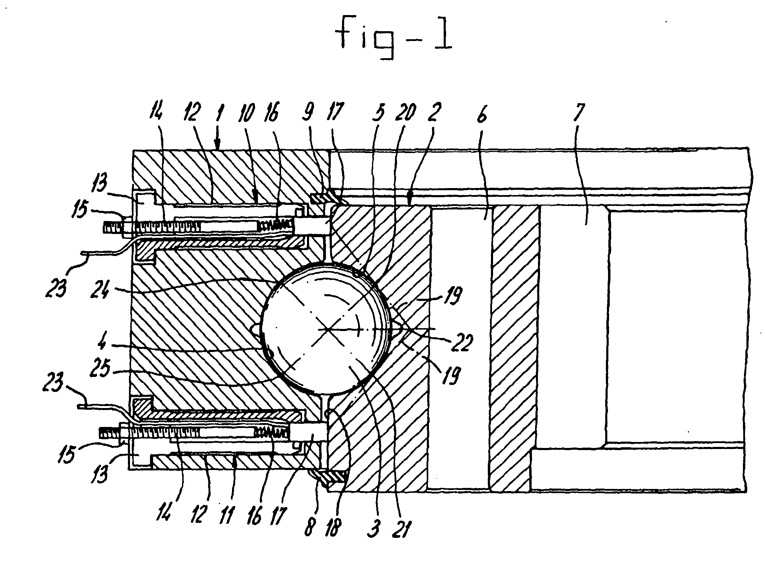

Subsequently, the invention will be described further with reference to an embodiment shown in the figure.

The figure shows a four-point contact ball slewing bearing having an outer ring 1, an inner ring 2 and a series of balls supporting these rings 1 and 2 mutually. The balls 3 are contained in the raceway 4 of the outer ring and in the raceway 5 of the inner ring.

In service. the outer ring 1 is connected to a supporting structure, such as the pedestal of a crane. Onto the inner ring 2, the crane structure itself is mounted. To that end. holes 6 are provided in the inner ring which may accommodate mounting bolts. Also, the inner ring on its inner circumference is provided with a tooth rack 7, which can cooperate with a pinion for rotating the crane structure.

As is common practice, seals 8, 9 have been provided in order to seal the bearing space between the rings 1, 2.

According to the invention, two sensor devices 10, 11 have been inserted in radial holes 12 in the outer ring. The sensor devices 10, 11 comprise a housing 13, a shaft 14, as well as a means 15 for fixing the shaft 14 in a certain position within housing 13. The other end of the shaft 14 is supplied with a means for pressing the ultrasonic sensors against the outer circumference 18 of the inner ring 2 or inner circumference of the outer ring.

The sensors have been directed in such a way, that the path of the ultrasonic waves emitted thereby is oblique, as indicated by lines 19. These paths of the ultrasonic waves impinge upon the raceway 5 of the inner ring 2. In particular, they impinge upon the points 20, 21, which are the most highly loaded areas of a four-point ball bearing.

By means of the sensors 17, it is therefore possible to obtain a very accurate assessment of the area of the raceway 5, and of the underlying structure of the inner ring 2 which is subjected to the highest stresses.

The paths 19 of the ultrasonic waves intersect each other at a spot 22 lying beyond the raceway 5. Thereby, also this rather highly loaded area can be scanned accurately.

The figure shows two sensor devices 10. 11 which are able to scan the inner ring. It is of course also possible to insert sensor devices in the inner ring for scanning of corresponding areas in the outer ring.

Although in the description, reference is made to an embodiment shown, the outer ring of which is connected to a supporting structure. an alternative embodiment with the inner ring connected to the supporting structure is also possible. In that case, the tooth rack will be located on the outer circumference of the outer ring. It is also possible that the tooth rack can be located on the non-rotating ring.

## Claims

1. Bearing comprising two opposing rings (1, 2) and a single row of rolling balls (3) accommodated in the raceways (4, 5) of each of the rings, wherein at least one of the rings (1, 2) carries two ultrasonic scanning devices (10, 11) which are situated on opposite sides to the raceway (4, 5) of the other ring (1, 2) for scanning specific areas (20, 21) of the other ring upon relative rotation of the rings, and wherein the ultrasonic scanning devices (10, 11) are directed such that their ultrasonic waves intersect each other at an area (22) lying beyond the raceway (5) of the other ring.

2. Bearing, according to claim 1, wherein the ultrasonic scanning device (10, 11) is opposite the other ring (1, 2) next to the raceway (4, 5) of said ring, and is directed such that ultrasonic waves produced thereby impinge upon the raceway (4, 5) of the other ring (1, 2) sidewardly.

3. Bearing according to claim 2, wherein the ultrasonic waves are at an angle lying between 35 and 70 degrees with respect to a radial line of the bearing.

4. Bearing according to claim 2 or 3, wherein the ultrasonic waves are at an angle lying between 35 and 55 degrees.

5. Bearing according to claim 2, 3 or 4, wherein the ultrasonic waves are at an angle of 45 degrees.

6. Bearing according to any of the preceding claims, wherein the ultrasonic scanning devices (10, 11) are directed such that their ultrasonic waves impinge upon opposite parts (20, 21) of the raceway (5) of the other ring (2).

7. Bearing according to any of the preceding claims, wherein each ultrasonic scanning device (10, 11) is accommodated in a through going hole (12) of the bearing ring (1).

8. Bearing according to claim 7, wherein each hole (12) is radially oriented.

9. Bearing according to any of the preceding claims, wherein each ultrasonic scanning device comprises a sensor (17) which is preloaded against the other ring (2).

10. Bearing according to any of the preceding claims, wherein the bearing is a four-point contact ball bearing.

## Patentansprüche

1. Lager mit zwei gegenüberliegenden Ringen (1, 2) und einer einzelnen Reihe von Rollkugeln (3), die in den Rollbahnen (4, 5) jedes Rings untergebracht sind, wobei wenigstens einer der Ringe (1, 2) zwei Ultraschall-Abtastvorrichtungen (10, 11) trägt, die sich auf den entgegengesetzten Seiten zu der Rollbahn (4, 5) des anderen Rings (1, 2) befinden, um spezielle Bereiche (20, 21) des anderen Rings nach einer relativen Drehung der Ringe abzutasten, und wobei die Ultraschall-Abtastvorrichtungen (10, 11) so ausgerichtet sind, dass ihre Ultraschallwellen einander in einem Bereich (22) schneiden, der außerhalb der Rollbahn (5) des anderen Rings liegt.

2. Lager nach Anspruch 1, wobei die Ultraschall-Abtastvorrichtung (10, 11) gegenüber dem anderen Ring (1, 2) neben der Rollbahn (4, 5) des Rings angeordnet und so ausgerichtet ist, dass erzeugte Ultraschallwellen seitlich auf die Rollbahn (4, 5) des anderen Rings (1, 2) auftreffen.

3. Lager nach Anspruch 2, wobei die Ultraschallwellen einen Winkel zwischen 35 und 70 Grad zu einer Radiallinie des Lagers aufweisen.

4. Lager nach Anspruch 2 oder 3, wobei die Ultraschallwellen in einem Winkel zischen 35 und 55 Grad liegen.

5. Lager nach Anspruch 2, 3 oder 4, wobei die Ultraschallwellen einen Winkel von 45 Grad einnehmen.

6. Lager nach einem der vorangehenden Ansprüche, wobei die Ultraschall-Abtastvorrichtungen (10, 11) so ausgerichtet sind, dass ihre Ultraschallwellen auf gegenüberliegende Teile (20, 21) der Rollbahn (5) des anderen Rings (2) auftreffen.

7. Lager nach einem der vorangehenden Ansprüche, wobei jede Ultraschall-Abtastvorrichtung (10, 11) in einem Durchgangsloch (12) des Lagerrings (1) untergebracht ist.

8. Lager nach Anspruch 7, wobei jedes Loch (12) radial ausgerichtet ist.

9. Lager nach einem der vorangehenden Ansprüche, wobei jede Ultraschall-Abtastvorrichtung einen Sensor (17) umfasst, der gegen den anderen Ring (2) vorgespannt ist.

10. Lager nach einem der vorangehenden Ansprüche, wobei das Lager ein Vierpunkt-Kugellager ist.

## Revendications

1. Palier comprenant deux bagues opposées (1, 2) et une rangée simple de billes de roulement (3) logées dans les chemins de roulement (4, 5) de chacune des bagues, dans lequel au moins l'une des bagues (1, 2) porte deux dispositifs de balayage ultrasonores (10, 11), qui sont situés sur des côtés opposés au chemin de roulement (4, 5) de l'autre bague (1, 2), destinés à balayer des zones spécifiques (20, 21) de l'autre bague à la rotation des bagues l'une par rapport à l'autre et dans lequel les dispositifs de balayage ultrasonores (10, 11) sont dirigés de telle sorte que leurs ondes ultrasonores se croisent dans une zone (22) située au-delà du chemin de roulement (5) de l'autre bague.

2. Palier selon la revendication 1, dans lequel le dispositif de balayage ultrasonore (10, 11) se situé vis-à-vis de l'autre bague (1, 2), adjacent au chemin de roulement (4, 5) de ladite bague, et est dirigé de telle sorte que les ondes ultrasonores produites par ce dernier heurtent latéralement le chemin de roulement (4, 5) de l'autre bague (1, 2).

3. Palier selon la revendication 2, dans lequel les ondes ultrasonores s'étendent selon un angle compris entre 35 et 70 degrés par rapport à une ligne radiale du palier.

4. Palier selon la revendication 2 ou 3, dans lequel les ondes ultrasonores s'étendent selon un angle compris entre 35 et 55 degrés.

5. Palier selon la revendication 2, 3 or 4, dans lequel les ondes ultrasonores s'étendent selon un angle de 45 degrés.

6. Palier selon l'une quelconque des revendications précédentes, dans lequel les dispositifs de balayage ultrasonores (10, 11) sont dirigés de telle sorte que leurs ondes ultrasonores heurtent des parties opposées (20, 21) du chemin de roulement (5) de l'autre bague (2).

7. Palier selon l'une quelconque des revendications précédentes, dans lequel chaque dispositif de balayage ultrasonore (10, 11) est logé dans un trou traversant (12) de la bague de palier (1).

8. Palier selon la revendication 7, dans lequel chaque trou (12) est orienté radialement.

9. Palier selon l'une quelconque des revendications précédentes, dans lequel chaque dispositif de balayage ultrasonore comprend un capteur (17) qui est préchargé contre l'autre bague (2).

10. Palier selon l'une quelconque des revendications précédentes, dans lequel le palier est un roulement à billes à quatre points de contact.
